Europäisches Patentamt

European Patent Office

Office européen des brevets

(19)

(11) Veröffentlichungsnummer· **0 019 229**
**A1**

(12) # EUROPÄISCHE PATENTANMELDUNG

(21) Anmeldenummer: 80102542.0

(22) Anmeldetag: 30.10.78

(51) Int. Cl.³: **F 21 K 2/00**
G 09 F 13/20
//G02F1/01

(30) Priorität: 29.11.77 DE 2753203

(43) Veröffentlichungstag der Anmeldung:
26.11.80 Patentblatt 80/24

(84) Benannte Vertragsstaaten:
CH FR GB NL SE

(71) Anmelder: SIEMENS AKTIENGESELLSCHAFT Berlin
und München
Postfach 22 02 61
D-8000 München 22(DE)

(72) Erfinder: Krüger, Hans, Dipl.-Phys.
Peralohstrasse 13
D-8000 München 80(DE)

(72) Erfinder: Schauer, Alois, Dr.
Lohengrinstrasse 7
D-8022 Grünwald(DE)

(72) Erfinder: Walter, Karl-Heinz, Dipl.-Ing.
Herzog-Heinrich-Strasse 13
D-8018 Grafing(DE)

(54) Vorrichtung zur Darstellung eines Bildes vor einem optisch kontrastierenden Hintergrund.

(57) Die Erfindung bezieht sich auf ein Display mit einem vorzugsweise plattenförmigen Körper (Fluoreszenzkörper (12, 13) und einem vor den Körper gesetzten Lichtventil (17). Der Fluoreszenzkörper besteht aus einem Material mit einem Brechungsindex größer 1, ist mit Lichtaustrittsfenstern (3) versehen und enthält Partikel, die in einem ersten Frequenzbereich (Emissionsband) fluoreszieren. Das Lichtventil (17) hat eine Anzahl von den Lichtaustrittsfenstern jeweils zugeordneten, in einem zweiten Frequenzbereich (Absorptionsband) sperrenden Anzeigeelementen. Zur Bilddarstellung werden einzelne Bereiche der Anzeigevorrichtung elektrisch geschaltet.

Erfindungsgemäß geschieht die Schaltung durch Änderung des ggf. noch zusätzlich eingeengten Emissionsbandes der fluoreszierenden Partikel. Falls nötig, kann zusätzlich auch noch das Absorptionsband des Lichtventils verändert werden.

EP 0 019 229 A1

0019229

SIEMENS AKTIENGESELLSCHAFT          Unser Zeichen

Berlin und München                  VPA 77 P 1175 EUR 01

Ausscheidung aus Patentanmeldung P 78 101 262.0

## Vorrichtung zur Darstellung eines Bildes vor einem optisch kontrastierenden Hintergrund

Die Erfindung betrifft eine Vorrichtung gemäß dem Oberbegriff des Anspruchs 1.

Displays mit einer bildaufhellenden Fluoreszenzplatte, auch fluoreszenzaktivierte Displays (FLAD) genannt, gehören bereits zum Stand der Technik; vergl. hierzu beispielsweise DE-OS 25 54 226, den in Elektronik-Zeitung v. 25.03.77 erschienenen Artikel mit dem Titel "Hell und sparsam" oder den Beitrag in "Elektronik" 6 (1977) 55. Die in den genannten Literaturstellen diskutierte Fluoreszenzplatte sammelt einen Großteil des auf sie treffenden Umgebungslichts durch Fluoreszenzemission und nachfolgende (Total-)Reflexionen an ihren Grenzflächen, leitet die eingefangene Strahlung in ihrem Inneren fort und gibt sie an speziellen Lichtaustrittsfenstern mit erhöhter Intensität wieder ab. Befindet sich vor einer solchen Platte eine Anzeigeeinheit mit zu den Lichtaustrittsfenstern fluchtenden Anzeigeelementen, so wird die Leuchtstärke des dargestellten Bildes um einen Faktor verstärkt, der in erster Näherung dem Verhältnis der lichtsammelnden zur lichtabgebenden Plattenfläche entspricht.

Bisher hatte man als Lichtventil für das FLAD eine Flüssigkristallzelle auf der Basis des Schadt-Helfrich-Effekts oder des "Phase-Change"-Effekts oder aber ein

Les 1 Ode /07.05.80

0019229

elektrochromes Display (ECD) vorgesehen. Solche Anzeigevorrichtungen verbrauchen zwar wenig Leistung und kommen mit relativ geringen Schaltspannungen aus, sind aber relativ kompliziert aufgebaut und haben zudem noch spezifische Nachteile: Eine Schadt-Helfrich-Zelle liefert relativ lichtschwache Bilder und hat einen nur begrenzten Betrachtungswinkelbereich; bei einem Phase-Change-Display ist noch immer der Kontrast recht unbefriedigend; und die bisher entwickelten ECD's, die alle mit einem elektrochemichromen Effekt arbeiten und einen Elektrolyten benötigen, lassen sich schlecht multiplexen und zeigen relativ rasch Zersetzungserscheinungen.

Der Erfindung liegt die Aufgabe zugrunde, ein FLAD so auszubilden, daß es bei einfachem Aufbau gute optische Qualitäten zeigt, über eine lange Lebensdauer verfügt und einen Multiplexbetrieb mit hohem Multiplexgrad zuläßt. Diese Aufgabe wird erfindungsgemäß durch die im Anspruch 1 gekennzeichnete Vorrichtung gelöst.

Bei dem vorgeschlagenen Display kann das Emissionsband auch noch durch zusätzliche Maßnahmen wie Komprimierungen oder Ausfilterungen weiter eingeeingt werden. Sollten diese Veränderungen nicht ausreichen, so hat man noch die Möglichkeit, gleichzeitig mit dem Emissionsband das Absorptionsband, und zwar in die entgegengesetzte Richtung, zu verschieben. Im Normalfall wird das Lichtventil im nichtgeschalteten Zustand ("Ruhezustand") das Fluoreszenzlicht absorbieren und im eingeschalteten Zustand ("angeregter Zustand") das Licht freigeben (Anspruch 3). Es ist aber auch denkbar und - wie statistische Betrachtungen zeigen - vom Leistungsverbrauch her gesehen sogar günstiger, einen Ruhezustand zu wählen, bei dem das Fluoreszenzband außerhalb des Absorptionsbandes des Lichtventils liegt und im angeregten Zustand vom Abso ptionsband überdeckt wird. In diesem Fall wären bei dem hier vorgeschlagenen Darstellungsverfahren jeweils gerade diejenigen Anzeigeelemente einzuschalten, die nicht zum Bild sondern zum Bildhintergrund gehören. Eine solche "komplementäre Ansteuerung" ist Gegenstand des Anspruchs 4.

Es sei darauf hingewiesen, daß der verwendete Begriff "Verschiebung des Fluoreszenz- bzw. Absorptionsbandes" neben reinen Versetzungen von ansonsten unveränderten Frequenzbändern auch andere Bandeinwirkungen erfaßt, die im Ergebnis zu dem für die optische Darstellung erforderlichen Wechsel im optischen Erscheinungsbild führen. Hierunter fallen beispielsweise auch Verschiebungen der oberen oder unteren Grenzfrequenzen (Absorptionskanten) des Absorptionsbandes oder Banddeformationen, bei denen das Absorptionsmaximum wandert. Für die Erfindung wesentlich ist lediglich, daß diese Bandveränderungen auf einem reinen Feldeffekt beruhen.

Weitere vorteilhafte Ausgestaltungen und Weiterbildungen der Erfindung sind in den beigefügten Ansprüchen charakterisiert.

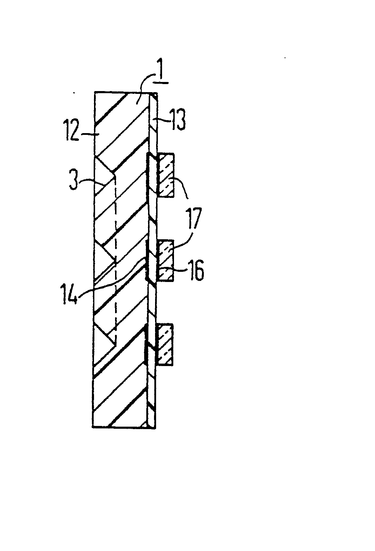

Die Erfindung soll nun anhand eines besonders bevorzugten Ausführungsbeispiels unter Bezugnahme auf die beigefügte Figur näher erläutert werden.

Die Figur zeigt in einem schematisch gehaltenen Seitenschnitt eine einstellige Ziffernanzeige. Diese Anzeige umfaßt eine Fluoreszenzplatte, die aus einer hinteren, an ihren Seitenflächen verspiegelten Teilplatte 12 und einer vorderen Teilplatte (Fluoreszenzschicht 13) besteht. Die hintere Teilplatte ist frei von fluoreszierenden Partikeln und enthält Lichtaustrittsfenster in Form von (unverspiegelten) Einkerbungen 3, die zusammen eine "8" bilden. Die Fluoreszenzschicht 13 enthält den Fluoreszenzstoffzusatz und ist außerdem jeweils von einer der Kerben zwischen transparenten elektrisch leitenden Schichten 14,16 eingeschlossen; die fluoreszierenden Partikel sind so gewählt, daß sie ein schmalbandiges Emissionsspektrum von einigen 10 nm haben.

Beispiele derartiger Fluoreszenzstoffe - gelöst in einer Flüssigkeit - sind in der älteren deutschen PatentanmeldungP 27 42 899.5 genannt. Ebenfalls fluchtend zu den Kerben liegen vor den elektrisch leitenden Schichten jeweils optische Filter 17. Diese Filter können Kantenfilter oder Spektralfilter (Interferenz-Filter) sein, die auftreffendes Licht wellenlängenselektiv hindurchlassen. Im vorliegenden Fall ist das Emissionsband der fluoreszierenden Partikel so auf den Durchlaßbereich des optischen Filters abgestimmt, daß die Anzeigeelemente im Ruhezustand dunkel und im angeregten Zustand farbig erscheinen.

Die Aufteilung der Fluoreszenzplatte in einen dicken hinteren Teil und einen relativ dünnen vorderen Teil dient einmal dazu, den Fluoreszenzstoff im Bereich der Lichtaustrittsfenster bequem unter relativ hohe Feldstärken setzen zu können, und bringt zum anderen den Vorteil, daß das Fluoreszenzlicht auf seinem Weg zu den einzelnen Lichtaustrittsfenstern nur wenig durch die sog. Selbstabsorption geschwächt wird.

- 5 -   VPA 77 P 1175 EUR[01]

Bei der dargestellten Ausführung befinden sich lediglich vor den Lichtaustrittsfenstern gesonderte, kleinflächige Displays. Diese Geometrie hat den Vorzug, daß auch durch einen großen Teil der Vorderfläche Licht in die Platte eintreten kann und sich somit eine große Kollektorfläche ergibt. Vorteilhaft ist außerdem, daß die Lichtventile vor den einzelnen Lichtaustrittsfenstern eine relativ geringe Bautiefe haben; so kann nämlich die dargestellte Information auch noch aus schrägen Richtungen gut abgelesen werden. Schließlich zeichnet sich das Ausführungsbeispiel auch noch dadurch aus, daß es rationell und kostengünstig hergestellt werden kann, ein Vorzug, der vor allem bei Großserien-Fertigungen ins Gewicht fällt.

Die Erfindung beschränkt sich nicht auf das dargestellte Ausführungsbeispiel. So kommen insb. auch Lichtventile infrage, deren Absorptionsverhalten durch Feldeffekte so beeinflußt werden kann, daß sich im Zusammenwirken mit einem Fluoreszenzkörper ausreichende optische Kontraste erzeugen lassen. Besonders eignen sich dafür Festkörper-ECD's auf der Basis des Franz-Keldysch-Effekts (Z. Naturforsch. 13a (1958) 484) oder des (linearen und quadratischen) Stark-Effektes (US-PS 3 317 266). Daneben ist es möglich, bei einem SbSi-Kristall die untere Grenzwellenlänge des Absorptionsbandes um nahezu 10 nm zu kürzeren Wellenlängen hin zu verschieben (J. Phys. Chem. Solids 23 (1961) 249). In "Modern Quantum Chem." Vol. 3, 1965, S. 45-65, wird entwickelt, wie E-Felder das Absorptionsverhalten in flüssigen Lösungen beeinflussen können.

Außerdem kann man auf bandeinengende Mittel wie dielektrische Spiegel verzichten, wenn das Fluoreszenzspektrum selbst hinreichend schmal ist. Dies ist vor allem bei Festkörper-Lösungen zu erwarten.

9 Patentansprüche
1 Figur

0⌐19229

Patentansprüche

1. Vorrichtung, die zur Darstellung eines Bildes vor einem optisch kontrastierenden Hintergrund dient und bereichsweise zwischen verschiedenen optischen Zuständen (Ruhezustand, angeregter Zustand) geschaltet werden kann, enthaltend einen vorzugsweise plattenförmigen Körper (Fluoreszenzkörper), der aus einem Material mit einem Brechungsindex größer 1 besteht, mit Lichtaustrittsfenstern (3) versehen.ist und in dem in einem ersten Frequenzbereich (Emissionsband) fluoreszierende Partikel gelöst sind, sowie ein vor dem Fluoreszenzkörper befindliches Lichtventil mit einer Anzahl von den Lichtaustrittsfenstern (3) jeweils zugeordneten, in einem zweiten Frequenzbereich (Absorptionsband) sperrenden Anzeigeelementen (17), wobei zur Bilddarstellung einzelne Bereiche der Vorrichtung durch Erzeugung eines elektrischen Feldes geschaltet werden, d a d u r c h  g e k e n n z e i c h n e t , daß die Schaltung durch Änderung des Emissionsbandes der fluoreszierenden Partikel geschieht.

2. Vorrichtung nach Anspruch 1, d a d u r c h g e k e n n z e i c h n e t , daß zur Bilddarstellung mit dem Emissionsband der fluoreszierenden Partikel zugleich auch das Absorptionsband des Lichtventils geschaltet wird.

3. Vorrichtung nach Anspruch 1 oder 2, d a d u r c h g e k e n n z e i c h n e t , daß im Ruhezustand das Emissionsband der fluoreszierenden Partikel im wesentlichen innerhalb des Absorptionsbandes des Lichtventils liegt und daß zur Bilddarstellung in den jeweils zum Bild gehörenden Bereichen der Vorrichtung das Emissionsband derart verändert wird, daß es im wesentlichen außerhalb des Absorptionsbandes zu liegen kommt.

4. Vorrichtung nach Anspruch 1 oder 2, d a d u r c h g e k e n n z e i c h n e t , daß im Ruhezustand das Emissionsband der fluoreszierenden Partikel im wesentlichen außerhalb des Absorptionsbandes des Lichtventils liegt und daß zur Bilddarstellung in den jeweils zum Bildhintergrund gehören Bereichen der Vorrichtung das Emissionsband derart verändert wird, daß es im wesentlichen innerhalb des Absorptionsbandes zu liegen kommt ("komplementäre Ansteuerung").

5. Vorrichtung nach Anspruch 3 oder 4, d a d u r c h g e k e n n z e i c h n e t , daß der Fluoreszenzkörper aus einem hinteren und einem vorderen Teilkörper (12 bzw. 13) besteht, die beide vorzugsweise plattenförmig ausgebildet sind, wobei der hintere Teilkörper (12) mit den Lichtaustrittsfenstern (3) versehen ist und keine fluoreszierenden Partikel hat, während der vordere Teilkörper (13) die fluoreszierenden Partikel enthält und jeweils vor den Lichtaustrittsfenstern (3) zwischen transparenten, elektrisch leitfähigen Schichten (14,15) eingeschlossen ist.

6. Vorrichtung nach Anspruch 3 oder 4, d a d u r c h g e k e n n z e i c h n e t , daß das Lichtventil ein Kantenfilter (17) ist.

7. Vorrichtung nach Anspruch 3 oder 4, d a d u r c h g e k e n n z e i c h n e t , daß das Lichtventil ein Bandpaßfilter, insb. in Form eines Interferenz-Filters, ist.

8. Vorrichtung nach einem der Ansprüche 5 bis 7, d a d u r c h g e k e n n z e i c h n e t , daß das Lichtventil aus Anzeigeelementen (17) besteht, die lediglich die Lichtaustrittsfenster (3) des Fluoreszenzkörpers bedecken.

9. Vorrichtung nach einem der Ansprüche 1 bis 8, d a d u r c h g e k e n n z e i c h n e t , daß das Emissionsband der fluoreszierenden Partikel noch zusätzlich eingeengt ist.

0019229

Nummer der Anmeldung

EP 80 10 2542

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 496 410 (A.J. MacINTYRE) <br> * Spalte 2, Zeile 51 - Spalte 3, Zeile 13; Spalte 5, Zeile 63 - Spalte 6, Zeile 11; Patentansprüche 1,7 und 8; Figur 4 * | 1,5,7 |
| | -- | |
| | DE - A - 2 619 367 (SIEMENS) <br> * Patentansprüche 1,7 und 8; Figuren * | 1-3,8 |
| | ---- | |

**KLASSIFIKATION DER ANMELDUNG (Int Cl ³)**

```
F 21 K   2/00
G 09 F  13/20//
G 02 F   1/01
```

**RECHERCHIERTE SACHGEBIETE (Int. Cl. ³)**

```
G 02 F   1/01
         1/133
         1/17
G 04 G   9/00
F 21 K   2/00
G 09 F  13/20
         9/30
         9/33
H 05 B  33/12
H 05 B  33/00
```

**KATEGORIE DER GENANNTEN DOKUMENTE**

X: von besonderer Bedeutung
A: technologischer Hintergrund
O: nichtschriftliche Offenbarung
P: Zwischenliteratur
T. der Erfindung zugrunde liegende Theorien oder Grunosatze
E kollidierende Anmeldung
D. in der Anmeldung angeführtes Dokument
L. aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prufer |
|---|---|---|
| Den Haag | 21-08-1980 | BORMS |

EPA form 1503.1   06.78